# EUROPEAN PATENT APPLICATION

(11) **EP 3 133 755 A1**
(43) Date of publication of application: **22.02.2017**
(21) Application number: 15181663.4
(22) Date of filing: 20.08.2015
(51) Int. Cl.: H04J 14/02

(54) **AN OPTICAL NODE FOR MANAGING OPTICAL SIGNALS**

(71) Applicant: ALCATEL LUCENT, 92100 Boulogne-Billancourt (FR)
(72) Inventor: POINTURIER, Yvan, 91620 NOZAY (FR); DE VALICOURT, Guilhem, HOLMDEL, NJ New Jersey 07733-1661 (US)
(74) Representative: Cabinet Camus Lebkiri

(57) **Abstract**

An optical node (ON1) located on a lightpath from an optical network (NTW) for managing a first input optical signal (IS1) conveyed on said lightpath, said first optical node (ON1) comprising:
- a first control device (CT1) adapted:
∘ for receiving the first input optical signal (IS1),
∘ for extracting a first set of control information (I1) comprised in said first input optical signal (IS1),
∘ for generating a first set of control commands (C1) from said first set of control information (11), said first set of control of commands (C1) being provided to a first signal manager device (SBM1),

- the first signal manager device (SBM1) adapted:
∘ for receiving and for processing the first input optical signal (IS1),
∘ for receiving from the first control device (CT1) the first set of control commands (C1),
∘ for applying said first set of control commands (C1) to the processing of the first input optical signal (IS1) for generating a first output optical signal (OS1),
∘ for outputting the first output optical signal (OS1).

## Description

### FIELD OF THE INVENTION

The present invention relates to optical communication network.

### BACKGROUND OF THE INVENTION

The realm of telecommunication has evolved drastically for the last decades, driven by new technologies and new habits of consumers. Communication networks have evolved to match the never ending increase of content request. Optical communication networks are key elements to sustain higher rate of content deliveries.

Metropolitan area network or datacenter can made use of optical based infrastructure, in particular when high volume of data need to transit from a node to another with low latency in a high density network. A practical scheme for interconnecting network elements is to design optical rings that benefit from advantages of the optical transport and reduce the number of required interconnections in comparison of a complex wiring in Ethernet networks.

Simple implementation of optical rings involves the reservation of optical carrier wavelengths during a given time for conveying data from an optical node belonging to the optical ring, to another optical node from said optical ring. Finer management of optical resources has led to enhanced optical rings using optical slot switching. In an optical slot switched ring, statistical multiplexing, i.-e. the possibility to share the wavelengths simultaneously by several sources and destinations enables an efficient use of the capacity while minimizing costly and energy-hungry opto-electronic processing.

Problems arise at an optical node which is an endpoint for incoming data and an entry point for data to be transmitted, said optical node either belonging to an optical ring implementing reservation of carrier wavelengths or optical slot switching, or belonging to a lightpath from a classical optical network. When data have reached said optical node as their endpoint, said data are dropped for being replaced with fresh data to be transmitted by the optical node. In practice the carrier wavelength(s) conveying the data to be dropped are recycled to convey the fresh data to be transmitted. Such re-use of some carrier wavelength(s) induce imbalance between said re-used carrier wavelength(s) and other carrier wavelength(s) conveying other data addressed to other optical nodes and transparently (i.-e. without opto-electronic processing) going through the optical node. The imbalance can be power imbalance between carrier wavelength(s) that are re-used and carrier wavelength(s) that are transparently crossing the optical node. Such power imbalance can induce power oscillations amongst the channels of the respective carrier wavelengths. This phenomenon of power oscillations can be even more harmful when combined with the use of optical amplifiers such as Erbium Doped Fiber Amplifier (EDFA) for overcoming the losses due to transmission effects and/or node traversal. Such phenomenon has been observed in circuit-switched optical networks. When power oscillations occur, the power of each carrier wavelength channel varies between 0 and a large value in a cyclic fashion that makes the whole network unstable.

A solution involves the systematic use of an opto-electronic (OE) conversion followed by an electro-optic (EO) conversion (the two successive conversions can be denoted OEO conversion) for each carrier wavelength arriving at the optical node. Such solution offers a poor efficiency in case a few carrier wavelengths are used in the optical network whereas the optical node is tailored with as many as OEO conversion linecards as the number of carrier wavelengths that can be used in the network. Such solution is also expensive and power hungry.

Therefore there is a need to offer a practical solution to manage undesirable effects of introduced imbalances. The solution has to meet several criteria such as the cost effectiveness in terms of number of involved processing device, in terms of operational costs, and said solution shall respond to the increasing need to integration of photonic systems.

### SUMMARY OF THE INVENTION

The invention aims to remedy all or some of the disadvantages of the above identified prior art. It particularly proposes ways to manage optical signals.

A first aspect of the invention relates then to an optical node, located on a lightpath from an optical network, for managing a first input optical signal conveyed on said lightpath, said first optical node comprising:
- a first control device adapted:
   o for receiving the first input optical signal,
   o for extracting a first set of control information comprised in said first input optical signal,
   o for generating a first set of control commands from said first set of control information, said first set of control of commands being provided to a first signal manager device,
- the first signal manager device adapted:
   o for receiving and for processing the first input optical signal,
   o for receiving from the first control device the first set of control commands,
   o for applying said first set of control commands to the processing of the first input optical signal for generating a first output optical signal,
   o for outputting the first output optical signal.

Thus, thanks to these features, the optical node is adapted to receive the first input optical signal, to extract the first set of control information from received first input optical signal, to determine the first set of control commands from said extracted first set of control information, and to apply said first set of control commands to the processing of the first input optical signal, resulting in the output of the first output optical signal. The first input optical signal is advantageously paired with the first set of control information that allows the optical node to obtain characteristics from said first input optical signal prior to processing it. It allows a gain of processing time since it is not required by the optical node to perform measurement first on the first input optical signal before being able to process it. It allows also a gain on component integration since it is possible to integrate the processing functions useful for the processing of the first input optical signal into a single optical component, the first signal manager device. The optical node is cost effective in terms of number of involved processing device, in terms of operational costs, and allows a practical integration of photonic systems.

According to various embodiments, such optical node comprises one or more of the features below, which should be considered in any possible technical combinations:
- the first signal manager device is further adapted to determine a first set of monitoring information from the received or processed first optical signal, and to provide said first set of monitoring information to the first control device,
- the first control device is further adapted to determine a second set of control information from the provided first set of monitoring information and to output said second set of control information,
- the optical node further comprises a first optical coupler, a first input from said first optical coupler being connected to an output from the first signal manager device outputting the first output optical signal, a second input from said first optical coupler being connected to an output from the first control device outputting the second set of control information, the first optical coupler being adapted to combine the outputted second set of control information and the outputted first output optical signal on an optical waveguide connected to an output of said first optical coupler,
- the control device is adapted to generate the first set of control commands after the receiving of the first optical signal in a time duration strictly less than a first threshold,
- the optical node comprises a first delaying device comprising an output connected at the input of the signal manager device and an input for receiving the first input optical signal, the delaying device being adapted for delaying said first input optical signal for a time duration greater or equal than the first threshold,
- the optical node further comprises a first optical splitter adapted for duplicating the first optical signal, an input form said first optical splitter receiving the first input optical signal conveyed on an optical waveguide from the lightpath, a first output from said first optical splitter being connected to the first control device, a second output from said first optical splitter being connected to the input from the first delaying device,
- the optical node further comprises an other delaying device comprising an input connected to the output of the first signal manager device and adapted for delaying the first output optical signal for a time duration greater or equal than the first threshold,
- the other delaying device comprises an output for outputting the delayed first output optical signal, said output from the second delaying device being connected to the first input from the first optical coupler,
- the first optical signal is a wavelength division multiplexed "WDM" optical signal comprising a plurality of carrier wavelengths,
- the first set of monitoring information comprises a plurality of measurements, each measurement being determined by the signal manager device from each carrier wavelength from the plurality of carrier wavelengths,
- the first signal manager device comprises:
   o an optical demultiplexer adapted for demultiplexing the first input optical signal, the optical demultiplexer comprising:
      ▪ an input for the first input optical signal and,
      ▪ a plurality of demultiplexed outputs, each demultiplexed output being associated to a carrier wavelength from the plurality of carrier wavelengths,
   o a plurality of optical gates,
      ▪ each optical gate being connected to a demultiplexed output from the plurality of demultiplexed outputs,
      ▪ and depending on the first set of control commands, each of said optical gate being adapted to block, or transparently let pass through, or let pass through with attenuation or amplification, the carrier wavelength from the plurality of carrier wavelengths associated to said demultiplexed output from the plurality of demultiplexed outputs,
   o a plurality of optical detectors,
      ▪ each optical detector being connected to a demultiplexed output from the plurality of demultiplexed outputs, or being connected to an output from an optical gate from the plurality of optical gates,
   o each of said optical detectors being adapted to determine the measurement from the plurality of measurements corresponding to the carrier wavelength from the plurality of carrier wavelengths associated to said demultiplexed output from the plurality of demultiplexed outputs,
- the optical network is an optical packet switching network and the first optical signal is an optical packet switching signal,
- the optical network is an optical ring network.

### BRIEF DESCRIPTION OF THE FIGURES

Some embodiments of the present invention are now described, by way of example only, and with reference to the accompanying drawings, in which:
- FIG. 1 is a schematic block diagram of an optical ring network according to an embodiment of the invention,
- FIG. 2 is a schematic block diagram of an optical node according to an embodiment of the invention,
- FIG. 3 is a schematic block diagram of another optical node according to an embodiment of the invention,
- FIG. 4 is a schematic diagram of a first optical node and a second optical node according to an embodiment of the invention,
- FIG. 5 is a schematic diagram of another first optical node and another second optical node according to an embodiment of the invention.
- FIG. 6 is a schematic diagram of a signal manager device according to an embodiment of the invention,
- FIG. 7 is a schematic diagram of another signal manager device according to an embodiment of the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any example described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

In the following description of the figures, the elements designated with arrows are depicting either optical signals carried on waveguides or electrical signals carried on wired connections. The orientations of the arrows symbolize the propagation direction of the optical and/or electrical signals. Such schematic representations are non limiting and serve only for the understanding of the invention.

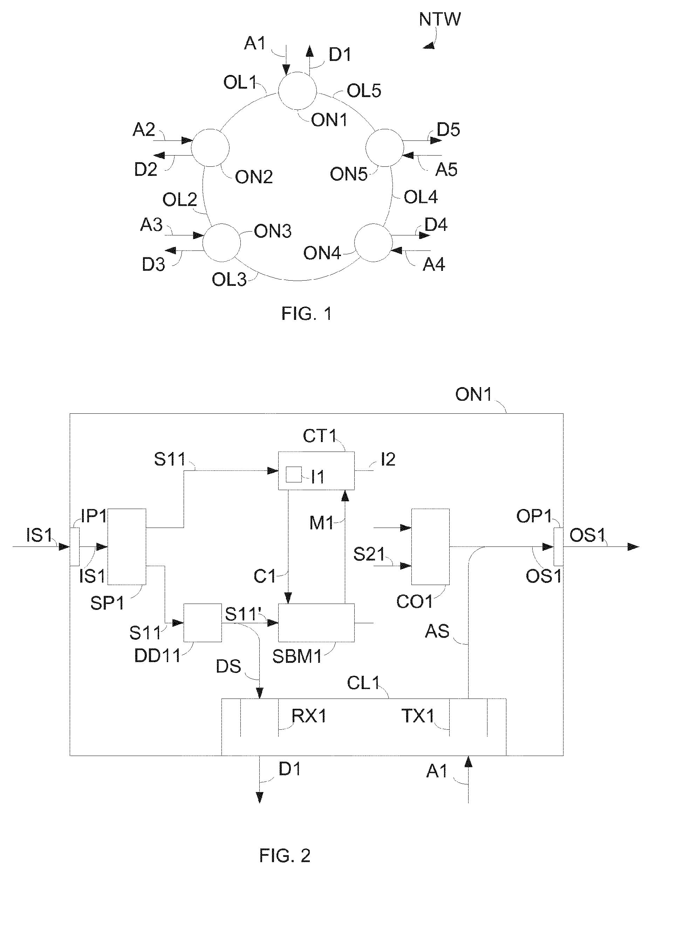

Referring to figure **FIG. 1****,** a schematic block diagram of an optical ring network is depicted.

In an embodiment, a simplified representation of an optical ring network NTW is schematized in figure FIG. 1.

The optical ring network NTW is an optical network for the transport of data and/or control information between endpoints. In such optical ring network NTW, the data and/or control information are conveyed along the optical network by optical signals.

The optical ring network NTW comprises a first optical node ON1, a second optical node ON2, a third optical node ON3, a fourth optical node ON4, and a fifth optical node ON5. For representation purpose, only five optical nodes are depicted but the optical ring network NTW may comprise less optical nodes than or more than 5. Usually in a dense metro area network comprising one or more optical ring network such as the optical ring network NTW, the number of optical nodes per optical ring network can be high.

An optical node, such as the first optical node ON1 or the second optical node ON2 or the third optical node ON3 or the fourth optical node ON4 or the fifth optical node ON5, is a network element from the optical ring network NTW. It can be an entry point for the data to be transported over the optical ring network NTW. For inserting data on the optical ring network NTW, the optical node may comprise functionalities such as electro-optic conversion, digital processing, optical modulation, optical transmission etc. The optical node can be also an exit point for the data that were transported over the optical ring network NTW, said data being addressed to said optical node. For extracting data from the optical signals conveyed on the optical ring network NTW, the optical node may comprise functionalities such as an optical receiver, opto-electronic conversion, digital processing etc. The optical node is also adapted to be crossed transparently by optical signals transiting over the optical ring network NTW. In an example, an optical signal transmitted by the fifth optical node ON5 and addressed to the second optical node ON2 crosses transparently the first optical node ON1. In such case since said optical signal is not targeting the first optical node ON1 as an endpoint, the first optical node ON1 does not stop the optical signal or extract data from it. When letting optical signals transparently go forward, the optical node may also amplify said optical signals in order for them to further propagate along the optical ring network NTW and eventually compensate impairments such as attenuation that impact the reach of said optical signals. In an example the amplification of optical signals is performed in the optical domain by Erbium Doped Fiber Amplifier (EDFA).

As en entry point for data, the first optical node ON1 comprises an input port (not depicted on figure FIG. 1) for being fed by data to be conveyed on the optical ring network NTW, the flow of said data being depicted by the arrow A1. The first optical node comprises also an output port (not depicted on figure FIG. 1) for outputting data conveyed on the optical ring network NTW, said data being addressed to the first optical node ON1 as an endpoint, the flow of said data being depicted by the arrow D1.

Similarly, the arrow A2 depicts the flow of data to be inserted on the optical ring network NTW by the second optical node ON2. The arrow D2 depicts the flow of data exiting the second optical node ON2 acting as a termination point for said data having being conveyed on the optical ring network NTW.

Similarly, the arrow A3 depicts the flow of data to be transmitted on the optical ring network NTW by the third optical node ON3. The arrow D3 depicts the flow of data that have reached said third optical node ON3 and that are extracted from the optical ring network NTW.

Similarly the arrow A4 depicts the flow of data received by the fourth optical node ON4 that is in charge of inputting said flow of data in the optical ring network NTW. The arrow D4 depicts a stream of data which are addressed to the fourth optical node ON4 as a destination point.

Similarly, the fifth optical node ON5 is inputted with a flow of data depicted by the arrow A5. The fifth optical node ON5 outputs the flow of data depicted by the arrow D5.

It should be noted that the incoming flow of data managed by the above mentioned optical nodes may come from other networks, being either optical networks, or wireless networks, or copper-wired networks, or a combination thereof.

It should be noted also that one of the above mentioned optical nodes performing extraction of a data flow depicted by arrows D1, D2, D3, D4, or D5, may extract such flow data in a manner that optical resources associated with said data are freed and available for another user, or the optical node can extract the flow of data and also transmit it transparently on the optical ring network NTW. This latter ability is advantageous in case of data to be broadcasted along the optical ring network NTW to numerous optical nodes.

The optical ring network NTW comprises optical links such as the first optical link OL1, the second optical link OL2, the third optical link OL3, the fourth optical link OL4, and the fifth optical link OL5. Such optical links are connecting optical nodes together, defining the structure of the optical path offered by the optical ring network NTW. In the example from figure FIG. 1, the first optical link OL1 connects the first optical node ON1 and the second optical node ON2 together. The second optical link OL2 connects the second optical node ON2 and the third optical node ON3. The third optical link OL3 connects the third optical node ON3 and the fourth optical node ON4. The fourth optical link OL4 connects the fourth optical node ON4 and the fifth optical node ON5. The fifth optical link OL5 connects the fifth optical node ON5 with the first optical node ON1. Such relationships between the optical nodes and the optical links define a lightpath of the optical ring network NTW.

In an example an optical link such as first optical link OL1, the second optical link OL2, the third optical link OL3, the fourth optical link OL4, or the fifth optical link OL5 are comprising optical waveguides such as single-mode optical fibers, multi-mode optical fibers, etc. Such optical links can be adapted to transport light signals in a single direction, for example only in the counter clockwise direction or only in the clockwise direction when referring to figure FIG. 1, or said optical links can be adapted to transport light signals in both directions clockwise and counter clockwise at the same time.

It should be noted that in the example depicted in figure FIG. 1, the optical ring network NTW defines a complete ring in which the end of the lightpath connects to its start, but in another example it can be an incomplete ring. In such incomplete ring, the fourth optical node ON4 and the first optical node ON1 may not be connected together.

Referring to figure **FIG. 2****,** a schematic block diagram of an optical node according to an embodiment of the invention is depicted.

Details from the first optical node ON1 according to an embodiment are now provided.

The structure, elements and the functions of the first optical node ON1 are applicable to other optical nodes such as the second optical node ON2, the third optical node ON3, the fourth optical node ON4 or the fifth optical node ON5 according to embodiments of the invention.

The first optical node ON1 comprises a first input optical port IP1 adapted for receiving from the optical ring network NTW a first input optical signal IS1. The first input optical port IP1 is for example an optical port for receiving a termination part of an optical fiber comprised in the fifth optical link OL5 that conveys the first input optical signal IS1.

The first optical node ON1 further comprises a first output optical port OP1 adapted for transmitting on the optical ring network NTW a first output optical signal OS1. The first output optical port OP1 is for example an optical port for a termination part of an optical fiber comprised in the first optical link L1 that will convey the first output optical signal OS1.

The first optical node ON1 further comprises a first optical splitter SP1. In an example, said first optical splitter SP1 is connected to the first optical port IP1. The first optical splitter SP1 is an optical splitter adapted for optically splitting or optically duplicating an input signal into two identical output signals. In an example the first optical splitter SP1 duplicates an input signal into two output signal that are attenuated compared to the amplitude of the input signal.

It is to be understood by the use of the term "identical", relating to two optical signals, that the said two optical signals comprises the same informative data but that their physical characteristics may differ. For example two identical signals carry the same data but may have different power.

In an embodiment, the first optical node ON1 further comprises a first control device CT1. In an example said first control device CT1 is connected to the first optical splitter SP1 for receiving one of the outputted optical signals. The first control device CT1 is adapted for processing received optical signals and generating control commands or control information derived from said processing. In particular, the first control device CT1 is adapted for extracting a first set of control information 11 from the received optical signal from the first optical splitter SP1.

In an example the first control device CT1 comprises an optical board for the receiving and processing of optical signals, and a control board for the processing in the electrical domain of the converted optical signals.

In an embodiment, the first optical node ON1 further comprises a first delaying device DD1. In an example said first delaying device DD1 is connected to the first optical splitter SP1 and receives one of the outputted optical signal by said first optical splitter SP1. The first delaying device DD1 is an optical element adapted to delay an input optical signal. In an example, the first delaying device DD1 is an optical delay line such as an optical fiber. In an example, the first delaying device is calibrated for delaying an input optical signal for hundreds of nanoseconds before outputting said input optical signal. In another example, the first delaying device delays an optical signal of 380 nanoseconds. It should be noted that such magnitude of delay is difficult to integrate on a silicon photonics optical element.

The first optical node ON1 further comprises a second optical splitter (not depicted in figure FIG. 2) connected to the output of the first delaying device DD11, and adapted for duplicating or splitting the delayed optical signal going out from the first delaying device DD11.

The first optical node ON1 further comprises an electronic layer device CL1. In an example, the electronic layer device CL1 is connected to an output of the second optical splitter and receives then a splitted optical signal. The electronic layer device CL comprises a first optical receiver RX1 for receiving said splitted optical signal, and converting it in the electrical domain. The first optical receiver RX1 is adapted for performing an optical to electrical conversion of inputted optical signal in order to extract in the electrical domain the informative signal of said inputted optical signal. The electronic layer device CL1 is also adapted to provide the extracted informative signal to the output port of the first optical node ON1 for generating the flow of data depicted by arrow D1 that exits from the optical ring network NTW.

In example the first optical receiver RX1 comprises functions such as a 90° hybrid polarization diverse receiver that cooperates with oscillators, sampling functions, chromatic dispersion compensation functions, polarization demultiplexer equalization function, carrier frequency estimation, demodulation decisions function, sample demappers functions cooperating with Forward Error Correction functions etc.

The electronic layer device CL1 further comprises a first optical transmitter TX1, for transmitting in the optical domain an inputted electrical signal. The first optical transmitter TX1 is adapted for performing an electrical to optical conversion of inputted electrical signal, in order for said converted electrical signal for being further managed in the optical domain by the first optical node ON1. The electronic layer device CL1 is also adapted to provide to the first optical transmitter TX1, the informative signal derived from the incoming flow of data depicted by arrow A1 on the input port from the first optical node ON1.

In an embodiment, the first optical node ON1 further comprises a first signal manager device SBM1. Said first signal manager device SBM1 is connected to one of the output from the second optical splitter and receives as an input an optical signal delayed by the delaying device DD11. The first signal manager device SBM1 is adapted to process optical signal. It is enabled to operate on a per optical resource basis. For example the first signal manager device SBM1 is adapted to process on a per-wavelength basis in case the delayed optical signal is a wavelength-division multiplexed optical signal. In another example wherein the delayed optical signal is a time-slotted wavelength-division multiplexed optical signal, the first signal manager device SBM1 is adapted to process optical signal on a per-time slot basis and on a per-wavelength basis. The first signal manager device SBM1 may for example be adapted to let pass on a given time slot, a given carrier wavelength comprised in the delayed optical signal, whereas it may be adapted to block on said given time slot, another given carrier wavelength comprised in said delayed optical signal.

In an embodiment, the first optical node ON1 further comprises a first optical coupler C01. The first optical coupler C01 is an optical device enabled to combine two or more optical signals into a single outputted optical signal. One input of the first optical coupler C01 is connected to an output from the first control device CT1. Another input of the first optical coupler C01 is connected to an output from the first signal manager device SBM1. The first optical coupler C01 is enabled to arrange together optical signals outputted respectively by said first control device CT1 and by said first signal manager device SBM1.

The first optical node ON1 further comprises a second optical coupler (not depicted on figure FIG. 2). The second optical coupler is an optical device enabled to combine two or more optical signals into a single outputted optical signal. One input of the second optical coupler is connected to an output from the first optical coupler C01, and another of its input is connected to the output of the first optical transmitter TX1 from the electronic layer device CL1. The second optical coupler outputs a combined optical signal resulting from the coupling of the optical signals outputted respectively by the first control device CT1 and by the first signal manager device SBM1 by the first optical coupler C01, further coupled with the optical signal outputted by the electronic layer device CL1 by the second optical coupler. In an embodiment the combined optical signal is the first output optical signal OS1 provided by the second optical coupler to the first output port OP1.

In an embodiment, the first control device CT1 and the first signal manager SBM1 are adapted to exchange messages together. For example the first control device CT1 is enabled to send control commands to the first signal manager SBM1 through a communication link not depicted on figure FIG. 2. The first signal manager device SBM1 is adapted to provide information to the first control device CT1 through said communication link or through other means. Such information may be for example status of the first signal manager device SBM1, statuses of the current processing of optical signals, or measurements performed on the processed optical signals etc.

In an embodiment, the handling of optical signals by the first optical node ON1 is now described.

The first input optical signal IS1 is received by the first optical node ON1 through the first input optical port. The first input optical signal IS1 is dispatched to the first optical splitter SP1.

The first optical splitter SP1 splits the first input optical signal IS1 into two equivalent optical signals. Said two equivalent optical signals are denoted as a first intermediate optical signal S11 which is transmitted respectively by each output port from the first optical splitter SP1.

A first duplicate of the first intermediate optical signal S11 is provided by the first optical splitter SP1 to the first control device CT1. A second duplicate of the first intermediate optical signal S11 is provided by the first optical splitter SP1 to the first delaying device DD11.

The first control device CT1 is adapted to receive and process one of the duplicated versions of the first intermediate optical signal S11. It performs an optical to electrical conversion. The first control device CT1 is further adapted to process the converted optical signal in the electrical domain. For example the first control device CT1 may comprises signal processing functionalities to process the converted optical signal in the electrical domain.

The first control device CT1 comprises means for separating in said electrical domain the data plane and the control plane both carried over the first intermediate optical signal. In particular the first control device CT1 is adapted to extract a first set of control information I1 comprised in the first intermediate optical signal. Said first set of control information I1 relates to characteristics of the first input optical signal IS1. It is important to note that said first set of control information was brought to the first optical node ON1 through the received first input optical signal IS1.

In an embodiment, the first set of control information I1 is generated and embedded into the first input optical signal IS1 by an upstream optical node from the first optical node ON1. In an example, referring to figure FIG. 1, the first set of control information I1 is included into the first input optical signal IS1 by the fifth optical node ON5 which is neighboring node from the first optical node ON1 located upstream.

In an embodiment, the first input optical signal IS1 is obtained through Wavelength Division Multiplexing (WDM). Some of the carrier wavelengths are dedicated to the data plane for transporting informative data, and some other of the carrier wavelengths are dedicated to the control plane for transporting control information, for example the first set of control information I1.

In an embodiment wherein the first input optical signal IS1 is a WDM optical signal, the first set of control information I1 comprises sets of information characterizing respectively some or all of the carrier wavelengths used by said first input optical signal IS1.

In an example, the first control device CT1 comprises non-coherent signaling functions adapted for receiving and processing the first input optical signal IS1.

The first control device CT1 processes the first set of control information I1 for generating a first set of control commands C1. The first control device CT1 uses the content of the first set of control information I1 to elaborate control commands, gathered into the first set of control commands C1 to be applied to one of the duplicate version of the first input optical signal IS1. For example the first set of control commands C1 comprises control commands related to the characteristics of the first input optical signal IS1.

The first control device CT1 provides the first set of control commands C1 to the first signal manager device SBM1.

One of the duplicated versions of the first intermediate optical signal S11 is provided to the first delaying device DD11. The first delaying device DD11 is adapted to delay in the optical domain the first intermediate optical signal S11. For example the first delaying device DD11 is a delay line that introduces a delay in the first intermediate optical signal S11.

In an embodiment the first delaying device DD11 is adapted to delay the first intermediate optical signal S11, being a replicate of the first input optical signal, for a time duration greater or equal than a first threshold, e.g., 100 ns. The first threshold corresponds to the time duration of the additional processing time operated by the first control device CT1, for extracting the first set of information I1, generating the first set of control commands C1 and providing it to the first signal manager device SBM1. The delay introduced by the first delaying device DD11 ensures that the first set of control commands C1 is available at the first signal manager device SBM1. In an example, the duration of the first threshold corresponds at least to the time spent in a processor from the first control device CT1 for processing the information carried by the control channel after it has been received by the first control device CT1.

The first delaying device DD11 outputs a second intermediate optical signal S11' which is the delayed replicate from the first intermediate optical signal S11.

The second optical splitter (not depicted in figure FIG. 2) provides a copy or replicate of the second intermediate optical signal S11', denoted as a dropped optical signal DS. The dropped optical signal DS is provided to the first optical receiver RX1 from the electronic layer device CL1. In an example, wherein the optical ring network NTW is a WDM optical network, the first optical receiver RX1 is adapted to tune on the carrier wavelengths that transport data whose endpoint is the first optical node ON1, meaning that the electronic layer CL is used as a gateway for exiting said data from the optical network NTW. The data comprised in the dropped optical signal DS and exiting the first optical node ON1 generates the flow of data D1. The corresponding carrier wavelengths can then be further re-used to transport new data along the optical network NTW.

The second optical splitter (not depicted in figure FIG. 2) provides another copy or replicate of the second intermediate optical signal S11' to the first signal manager device SBM1. The first signal manager device SBM1 processes said second intermediate optical signal S11'. In particular it uses the first set of control commands C1 for the processing of said second intermediate optical signal S11'. The processing of the second intermediate optical signal S11' is performed in the optical domain, and not requiring OEO conversions. The first signal manager device SBM1 is also adapted to performs measurements on said second intermediate optical signal S11', said measurements being representative of optical characteristics of the second intermediate optical signal S11'. It is important to note that such measurements are also representative of characteristics of the first input optical signal. From these measurements, the first signal manager SBM1 determines a first set of monitoring information M1. The first set of monitoring information M1 is provided to the first control device CT1.

Once the processing of the second intermediate optical signal S11' is achieved, the first signal manager device SBM1 outputs a third intermediate optical signal S21.

The first control device CT1 receives the first set of monitoring information I1 and processes it. From the measurements it contains, the first control device CT1 determines a second set of information I2. The second set of information I2 comprises information related to the characteristics of the second intermediate optical signal S11', equivalent to the first input optical signal IS1, at the time it has been received by the first optical node ON1 and being processed by the first signal manager SBM1.

The first control device CT1 converts into the optical domain the second set of information I2 for producing an optical signal. Said produced optical signal is denoted with the same symbol I2 on figure FIG. 2. In an example, the first control device CT1 uses the optical resources allocated to the control plane of the optical network NTW to produce the optical signal carrying the second set of information 12.

The first control device CT1 provides the optical signal carrying the second set of information I2 to one of the inputs of the first optical coupler C01.

The first signal manager device SBM1 provides the third intermediate optical signal S21 to the other input of the first optical coupler C01.

The optical signal carrying the second set of information I2 and the third intermediate optical signal S21 are then combined together into a single optical signal by the first optical coupler C01.

Optionally, if optical resources are available, either because they were not used prior to the receiving of the first input optical signal IS1 or because some resources were freed thanks to the dropping of data through the dropped optical signal DS, it is possible for fresh data to be inserted into the optical network NTW. The insertion is achieved by the first optical transmitter TX1 from the electronic layer device CL that converts the incoming flow of data A1 into an added optical signal AS. The electronic layer device CL provides said added optical signal AS to an input of the second optical coupler (not depicted on figure FIG. 2). Said second optical coupler is also provided on one of its other input with the optical signal resulting from the combination operated by the first optical coupler C01. The second optical coupler combines the optical signal provided by the first optical coupler C01 with the added optical signal AS provided by the first optical transmitter TX1 to produce a first output optical signal OS1.

The first output optical signal OS1 is provided by the second optical coupler (or by the first optical coupler C01 in case the second optical coupler is not present or is configured as pass-through since no added optical signal AS is available) to the first output optical port OP1.

Said first output optical port OP1 transmits the first output optical signal OS1 on the first optical link OL1 so that the informative data and the control data comprised in the first output optical signal OS1 can propagate on the optical network NTW.

It should be noted that there can be other arrangements of the components of the first optical node ON1 according to the present embodiment.

In particular, the second optical splitter (not depicted in figure FIG. 2), which provides the dropped optical signal DS, may be connected at the input of the first delaying device DD11 instead of being connected at the output of said first delaying device DD11. In such case, the dropped optical signal DS is provided at the same time to the electronic layer CL1, and to the delaying device DD11. In yet another example, the second optical splitter may be located between the first input optical port IP1 and the first optical splitter SP1.

The same applies for the second optical coupler (not depicted in figure FIG. 2), which allows the insertion of the added optical signal AS. Said second optical coupler may be located at one of the input of the first optical coupler C01, instead of being located at the output from said first optical coupler C01. In such case, the first optical coupler combines simultaneously the added optical signal AS, the sixth optical signal S41' and the optical signal carrying the second set of information I2.

In an architecture of the first optical node ON1 such as depicted in figure FIG. 2, a key element is the arrangement of the first delaying device DD11 on the lightpath of the optical signals to be processed between the first input IP1 and the first signal manager device SBM1.

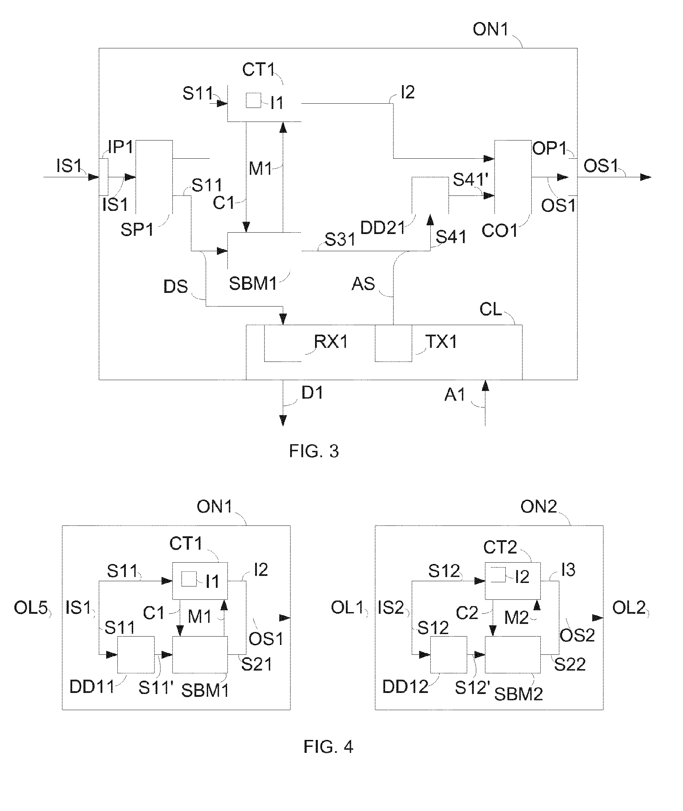

Referring to figure FIG. 3, a schematic block diagram of another optical node according to an embodiment of the invention is depicted.

In an embodiment, the first optical node ON1 is provided with an alternative arrangement:
- the first input optical port IP1 is connected to the input from the first optical splitter SP1,
- the outputs from the first optical splitter SP1 are connected to the first control device CT1 and to the second optical splitter (not depicted in figure FIG. 3),
- the first control device CT1 is connected to one of the inputs from the first optical coupler C01,
- one of the outputs from the second optical splitter is connected to the first optical receiver RX1 from the electronic layer device CL, and another output to the first signal manager device SBM1,
- the first signal manager device SBM1 is connected to one of the inputs from the second optical coupler (not depicted on figure FIG. 3),
- the first optical transmitter TX1 from the electronic layer device CL is connected to one of the inputs from the second optical coupler,
- the output from the second optical coupler is connected to an other delaying device DD21,
- the output from the other delaying device DD21 is connected to one of the input from the first optical coupler C01,
- the output from the first optical coupler C01 is connected to the first output optical port OP1.

The other delaying device DD21 is a similar device than the first delaying device DD11. The other delaying device DD21 is adapted to delay an optical signal.

The arrangement of the first optical node ON1 depicted in figure FIG. 3 differs from the arrangement of the first optical node ON1 depicted in figure FIG. 2 in that the other delaying device DD21 is located downstream from the first signal manager device SBM1, whereas the first delaying device DD11 is located upstream from the first signal manager device SBM1.

In an embodiment, the handling of optical signals by the present arrangement of the first optical node ON1 is now described.

The first input signal IS1 is received by the first input optical port IP1 from the first optical node ON1. Said first input signal IS1 is provided to the first optical splitter SP1.

The first optical splitter SP1 outputs the first intermediate optical signal S11, to the second optical splitter (not depicted on figure FIG. 3) and to the first control device CT1.

The first intermediate optical signal S11 is processed by the first control device CT1 that extracts the first set of control information I1. The first control device CT1 generates the first set of control commands C1 from said extracted first set of information I1. The first control device CT1 provides the first set of control commands C1 to the first signal manager device SBM1.

The second optical splitter splits the first intermediate optical signal S11 into two equivalent optical signals, the dropped optical signal DS and another optical signal not depicted in figure FIG. 3. The other optical signal is provided to the first signal manager device SBM1, whereas the dropped optical signal DS is provided to the first optical receiver RX1.

The dropped optical signal DS is processed by the first optical receiver RX1 from the electronic layer device CL as described above, for extracting informative data that are addressed to the first optical node ON1 as an endpoint.

The first signal manager device SBM1 processes the other optical signal provided by the output from the second optical splitter. Such processing is performed by taking into account the first set of control commands C1. The processing by the first signal manager device SBM1 results in the generation of a fourth intermediate optical signal S31. During said processing the first signal manager device SBM1 performs measurements representative of characteristics of the other optical signal. The measurements are collected into the first set of monitoring information M1.

The fourth intermediate optical signal S31 is provided to an input from the second optical coupler. Another input from said second optical coupler receives the added optical signal AS provided by the first optical transmitter TX1 from the electronic layer device CL. The fourth intermediate optical signal S31 and the added optical signal AS are combined into a fifth intermediate optical signal S41.

The fifth intermediate optical signal S41 is provided by the second optical coupler to the other delaying device DD21. The other delaying device DD21 introduces a delay in the fifth intermediate optical signal S41 and outputs a sixth optical signal S41' to the first optical coupler C01.

The signal manager device SBM1 provides the first set of monitoring information M1 to the first control device CT1. From these measurements comprised in the first set of monitoring information M1, the first control device CT1 determines the second set of information I2. The first control device CT1 generates an optical signal, depicted with the symbol I2 from this second set of information I2. The signal manager device SBM1 provides the optical signal carrying the second set of information I2 to the first optical coupler C01.

The first optical coupler C01 receives the optical signal carrying the second set of information I2 and the sixth intermediate optical signal S41', and combines them to output the first output optical signal OS1. Said first output optical signal OS1 is provided to the first output optical port OP1.

The first output optical port OP1 transmits the first output optical signal OS1 on the optical network NTW.

In the arrangement of the first optical node ON1 depicted on figure FIG. 3, the fourth intermediate optical signal S31 is timely transmitted in advance by the first signal manager device SBM1 compared to the transmission by the first control device CT1 of the optical signal carrying the second set of information I2. The delay introduced by the other delay device DD21 allows to compensate the delay between the transmission of the fourth intermediate optical signal S31 (or the fifth intermediate optical signal S41, in case the fourth intermediate optical signal S31 is combined with the added optical signal AS) and the optical signal carrying the second set of information I2.

In an embodiment, the other delay device DD21 further delays the fourth intermediate optical signal S31 or the fifth intermediate optical signal S41 so that the optical signal carrying the second set of information I2 is transmitted in advance by the first output optical port OP1. In such case, the first output optical signal OS1 comprises two components that are partially not time aligned, one component corresponding to the optical signal carrying the second set of information I2 and in advance compared to the other component corresponding to the sixth intermediate optical signal S41'. The time advance of the component carrying the second set of information I2 allows said second set of information I2 to reach the next optical node, for example the second optical node ON2, in advance compared to the component carrying the sixth intermediate optical signal S41'. Such time advance allows then the second optical node ON2 to extract the second set of information I2, to determine a new set of control commands, and uses those control commands for the processing of the component from the first output optical signal that carries the sixth intermediate optical signal S41'.

It should be noted that there can be other arrangements of the components of the first optical node ON1 according to the present embodiment.

In particular, the second optical splitter (not depicted in figure FIG. 3), which provides the dropped optical signal DS, may be connected at output of the first optical splitter SP1.

The same applies for the second optical coupler (not depicted in figure FIG. 3) which allows the insertion of the added optical signal AS. Said second optical coupler may be located at one of the output from the other delaying device DD21, or one of the outputs from the first optical coupler C01.

In an architecture of the first optical node ON1 such as depicted in figure FIG. 3, a key element is the arrangement of the other delaying device DD21 on the lightpath of the optical signals to be processed between the first signal manager device SBM1 and the first output optical port OP1.

Referring to figure FIG. 4, a schematic diagram of a first optical node and a second optical node according to an embodiment of the invention is depicted.

The cooperation of the first optical node ON1 and the second optical node ON2 is now described.

In an embodiment, the first optical node ON1 and the second optical node ON2 are arranged according to the embodiment in connection with the description of figure FIG. 2.

Similarly to the first optical node ON1, the second optical node ON2 comprises:
- an input optical port (not depicted in figure FIG. 4) for receiving a second input optical signal IS2 conveyed on the optical network NTW,
- the input optical port is connected to an optical splitter (not depicted on figure FIG .4),
- the optical splitter is connected to a second control device CT2, which fulfills for the second optical node ON2 the same functions as the first control device CT1 for the first optical node ON1,
- the optical splitter is also connected to a second delaying device DD12, adapted for delaying optical signals in a similar manner than the first delaying device DD11,
- the second delaying device DD12 is connected to a second signal manager device SBM2 which offers the same services and processing functions as the first signal manager device SBM1 from the first optical node ON1,
- the second signal manager device SBM2 and the second control device CT2 are connected to an optical coupler (not depicted on the figure FIG. 4). Said optical coupler is connected to an output optical port (not depicted on figure FIG. 4) from the second optical node ON2.

The second optical node ON2 also comprises an electronic layer device (not depicted on figure FIG. 4) for dropping data that are addressed to the second optical node ON2 as an exit point and generating the flow of data D2, and for adding data incoming from the flow of data A2 to be transported on the optical network NTW.

The first input signal IS1 is conveyed through the fifth optical link OL5 up to the first optical node ON1.

The first control device CT1 extracts the first set of control information I1 from the first input signal IS1 and determines the first set of control commands C1 which is provided to the first signal manager device SBM1.

The first delaying device D11 delays the first input optical signal IS1 (or more particularly the first intermediate optical signal S11 after the splitting of said first input optical signal IS1),

The first signal manager device SBM1 processes the second intermediate optical signal S11' according to the first set of control command C1, and determines the first set of monitoring information M1 which is provided to the first control device CT1.

The first control device CT1 generates the second set of information I2 which is converted into the optical domain.

Said optical signal carrying said second set of information I2 is combined with the third intermediate optical signal S21 outputted by the first signal manager device SBM1 to generate the first output optical signal OS1.

The first optical signal OS1 is then transmitted on the first optical link OL1 in the direction of the second optical node ON2.

The second optical node ON2 receives the first output optical signal OS1, which is considered as a second input optical signal IS2.

The second input optical signal IS2 is split into an other first intermediate optical signal S12 which is provided to the second delaying device DD12 and to the second control device CT2.

While the other first intermediate optical signal S12 is being delayed by the second delaying device DD12, the same other first intermediate optical signal S12 is being processed by the second control device CT2 for extracting the second set of information I2, that was generated by the first optical node ON1.

The second control device CT2 determines a second set of control commands C2 which is provided to the second signal manager device SBM2.

The second signal manager device SBM2 processes an other second intermediate optical signal S12', which is the delayed first intermediate optical signal S12, according to the second set of control information C2. During said processing, the second signal manager device SBM2 evaluates characteristics of the other second intermediate optical signal S12' and determines a second set of monitoring information M2. Said second set of monitoring information M2 comprises measurements related to the characteristics of the processed other second intermediate optical signal 12'.

The second set of monitoring information M2 is provided to the second control device CT2. Said second control device CT2 generates from this second set of monitoring information M2, a third set of information I3.

The second control device CT2 generates an optical signal carrying the third set of information I3, which is further combined with the optical signal outputted by the second signal manager device SBM2, depicts as an other third intermediate optical signal S22. The coupling of these two optical signals results into the generation of the second output optical signal OS2.

The second output optical signal OS2 is transmitted by the second optical node ON2 on the second optical link OL2, in the direction of the third optical node ON3.

The cooperation of the first optical node ON1 with the second optical node ON2 allows to provide from a neighboring node to another, useful information carried over the first set or second set of information. For example, if the first control device CT1 or the first signal manager device SBM1 detects an issue or a degradation of the first input optical signal IS1, the generated second set of information I2 by the first optical node ON1 allows the second optical node ON2 to adapt the processing of the second input optical signal IS2.

In such arrangements of the optical nodes, the delaying device such as the first delaying device DD11 or the second delaying device DD12 ensures that the control commands are available on the first signal manager device SBM1 or the second signal manager device SBM2 in order to process appropriately the received optical signals.

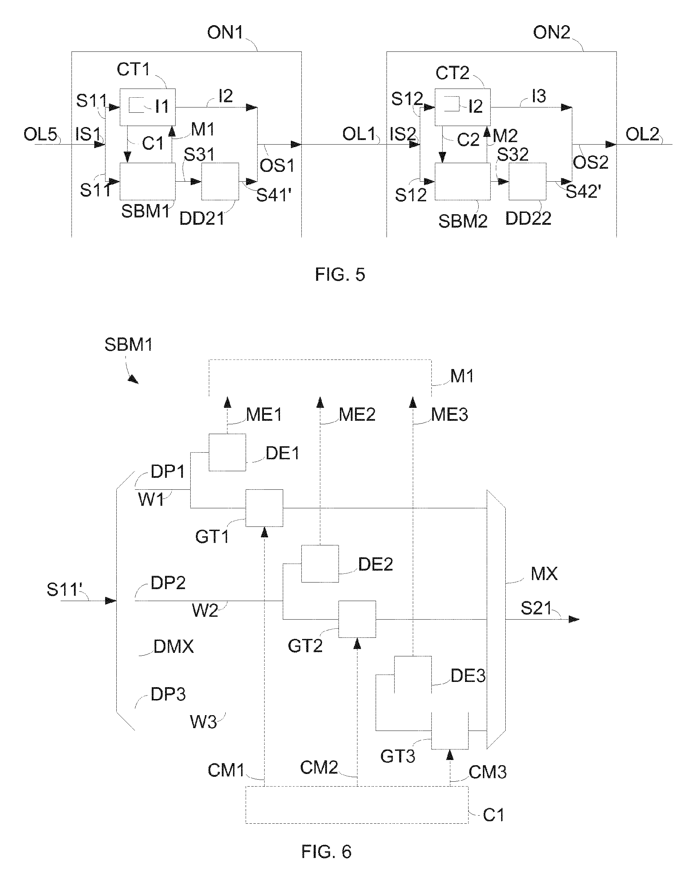

Referring to figure FIG. 5, a schematic diagram of another first optical node and another second optical node according to an embodiment of the invention is depicted.

Another cooperation of the first optical node ON1 and the second optical node ON2 is now described.

In an embodiment, the first optical node ON1 and the second optical node ON2 are arranged according to the embodiment in connection with the description of figure FIG. 3.

The second optical node ON2 comprises:
- an input optical port (not depicted on figure FIG. 5) for receiving the second input optical signal IS2,
- the input optical port feeds an optical splitter (not depicted on figure FIG. 5),
- said optical splitter feeds the second control device CT2 and the second signal manager device SBM2,
- the output from the second signal manager device SBM2 is connected to a second other delaying device DD22, which fulfills the same functions as the other delaying device DD21 from the first optical node ON1 as depicted for figure FIG. 3,
- an optical coupler (not depicted on figure FIG. 5) combines an optical output from the second control device CT2 and an output from the second other delaying device DD22,
- the output from optical coupler is connected to an output optical port from the second optical node ON2.

In such arrangement, the second optical node ON2 may further comprises other splitters or couplers, for example for the dropped/added optical signals that are handled by the electronic layer device (not depicted on figure FIG. 5) from the second optical node ON2).

The first optical node ON1 processes the first input optical signal IS1. Said first optical node ON1 outputs the first output optical signal OS1 in which the component corresponding to the optical signal carrying the second set of information I2 is in advance compared to the component corresponding to the sixth intermediate optical signal S41'. Such delay between the components comprised in the first output optical signal OS1 is achieved by the other delaying device DD21.

The first output optical signal OS1 reaches the second optical node ON2 as the second input optical signal IS2. The second control device CT2 is fed by the optical splitter with the other first intermediate optical signal S12. The other first intermediate optical signal S12 corresponds to the second input optical signal IS2.

In the other first intermediate optical signal S12, the component corresponding to the optical signal carrying the second set of information I2 is timely advanced. The second control device CT2 processes the other first intermediate optical signal S12 for extracting the second set of information I2. The second control device CT2 determines the second set of control commands C2 and provides it to the second signal manager device SBM2.

Since the component corresponding to the optical signal carrying the second set of information I2 is timely advanced in the second input optical signal IS2, once the component corresponding to the sixth intermediate optical signal S41' reaches the second signal manager device SBM2, the second set of control commands C2 is already available on said second signal manager device SBM2.

The second signal manager device SBM2 processes the first intermediate optical signal S12, which corresponds to the splitted second input optical signal IS2, according to said second set of control commands C2.

While the processing of the other first intermediate optical signal S12 is being operated, the second signal manager device SBM2 also determines the measurements to be included into the second set of monitoring information M2. Said second set of monitoring information M2 is then provided to the second control device CT2.

The second control device CT2 determines the third set of information I3 from the second set of monitoring information I2. The second control device CT2 generates the optical signal carrying the third set of information I3.

The signal manager device SMB2 outputs an other fourth intermediate optical signal S32 which results from the processing of the other first intermediate optical signal S12.

The other fourth intermediate optical signal S32 is delayed by the second other delaying device DD22 which outputs an other fifth intermediate optical signal S42'.

Said other fifth intermediate optical signal and the optical signal carrying the third set of control information I3 are then combined for generating the second output optical signal OS2.

The second optical node ON2 transmits the second output optical signal OS2 on the second optical link OL2 in the direction of the next neighboring node.

Referring to figure FIG. 6, a schematic diagram of a signal manager device according to an embodiment of the invention is depicted.

In an embodiment, an arrangement of a signal manager device such as the first signal manager device SBM1 or the second signal manager device SBM2 is detailed herein below.

The first signal manager device SBM1 is adapted to process WDM optical signals. In an example the second intermediate signal S11' is inputted to the first signal manager device SBM1. Said second intermediate signal S11' is a WDM optical signal comprising three different carrier wavelengths dedicated to the transport of informative data, the first carrier wavelength, the second carrier wavelength W2, and the third carrier wavelength W3.

In order to ease the understanding of the structure of the first signal manager device SBM1, a limited number of carrier wavelengths has been chosen, however the number of carrier wavelengths comprised in the first input optical signal IS1, and therefore in the second intermediate optical signal S11' can be higher. Furthermore the carrier wavelength and its associated optical signal are using the same symbol on figure FIG. 6 in order to simplify the schematic diagram of the first signal manager device SBM1. Therefore the symbol W1 denotes the first carrier wavelength and the optical signal modulated by the first carrier wavelength.

The first signal manager device SBM1 comprises a carrier wavelength demultiplexer DMX adapted for demultiplexing the second intermediate optical signal S11' into optical signals, each being associated to a carrier wavelength. In an example, the carrier wavelength demultiplexer DMX outputs:
- the first carrier wavelength optical signal W1 on a first demultiplexed output DP1,
- the second carrier wavelength optical signal W2 on a second demultiplexed output DP2,
- the third carrier wavelength optical signal W3 on a third demultiplexed output DP3.

It should be noted that the plurality of demultiplexed outputs is not limited to three outputs. In an example the number of outputs is dependent on the number of the carrier wavelengths supported in the optical network NTW.

The first signal manager device SBM1 further comprises a plurality of optical detectors, a first optical detector DE1, a second optical detector DE2, a third optical detector DE3, each being respectively associated to a carrier wavelength.

The first signal manager device SBM1 also comprises a plurality of optical gates, such as a first optical gate GT1, a second optical gate GT2, a third optical gate G3, adapted for letting pass or attenuate optical signals, each optical gate being respectively associated to a carrier wavelength. In case an optical gate is implemented with Silicon Optical Amplifiers (SOA), it can additionally add gain to optical signals.

It should be noted that the number of optical gates is not limited to three. In an example, the first signal manager device SBM1 may comprise one or two optical gates. In another example, the first signal manager device SBM1 may comprise more than three optical gates, such as ten optical gates. In yet another example, the number of optical gates comprised in the first signal manager device SBM1 is determined as a function of the number of carrier wavelength used in the on the optical network NTW.

The first demultiplexed output DP1 is connected to an input from the first optical detector DE1 and to an input from the first optical gate GT1.

The second demultiplexed output DP2 is connected to an input from the second optical detector DE2 and to an input from the second optical gate GT2.

The third demultiplexed output DP3 is connected to an input from the third optical detector DE3 and to an input from the third optical gate GT3.

An output from the first optical detector DE1 is connected to a processing module (not depicted on figure FIG. 6) from the first signal manager device SBM1. The first optical detector DE1 provides a first measurement ME1, representative of the characteristics of the first carrier wavelength optical signal W1, to said processing module in order to determine the first set of monitoring information M1.

An output from the second optical detector DE2 is connected to the processing module from the first signal manager device SBM1. The second optical detector DE2 provides a second measurement ME2, representative of the characteristics of the second carrier wavelength optical signal W2, to said processing module in order to determine the first set of monitoring information M1.

An output from the third optical detector DE3 is connected to the processing module from the first signal manager device SBM1. The third optical detector DE3 provide a third measurement ME3, representative of the characteristics of the third carrier wavelength optical signal W3, to said processing module in order to determine the first set of monitoring information M1.

In an embodiment an optical detector such as the first optical detector DE1, the second optical detector DE2, the third optical detector DE3, is a photodiode enabled to perform light measurement on optical signal. In an example, the first optical detector DE1 is configured to capture a power indication, or light intensity or variation of light intensity related to the optical signal modulated by the first carrier wavelength W1.

It should be noted that the plurality of measurements provided by the plurality of optical detectors is not limited to three measurements. The number of measurements that are determined is linked to the number of optical detectors, which is determined according to the number of carrier wavelengths.

The first optical gate GT1 processes the first carrier wavelength optical signal W1. The first optical gate GT1 is provided with a first control command CM1 from the first set of control commands C1. In an embodiment, the first control command CM1 indicates to the first optical gate GT1 to attenuate or amplify the first carrier wavelength optical signal W1. It is to be understood by the term "attenuate" that the first optical gate GT1 operates on the amplitude of the first carrier wavelength optical signal W1, by reducing the amplitude of said optical signal for example. It is also to be understood by the term "amplify" that the first optical gate GT1 operates on the amplitude of the first carrier wavelength optical signal W1, by increasing the amplitude of said optical signal for example.

In another example, the first control command CM1 indicates to the first signal manager device SBM1 to let pass the first carrier wavelength optical signal W1. It is to be understood by the term "let pass" that the first optical gate GT1 transparently transmits the first carrier wavelength optical signal W1 without operating a modification of said optical signal.

In yet another example, the first control command CM1 indicates to the first signal manager SBM1 to block the first carrier wavelength optical signal W1. In such case, it is to be understood that the first carrier wavelength W1 is not going through the first optical gate GT1. The first carrier wavelength W1 is then available for being used for adding new data to be transmitted on the optical network NTW through the added optical signal AS.

The second optical gate GT2 processes the second carrier wavelength optical signal W2. The second optical gate GT2 is provided with a second control command CM2 from the first set of control commands C1. In an embodiment the second control command CM2 indicates to the second optical gate GT2 to attenuate the second carrier wavelength W2. In other embodiments, the second control command CM2 indicates to the second optical gate GT2 to let pass or to block the second carrier wavelength optical signal W2.

The third optical gate GT3 processes the third carrier wavelength optical signal W3 according to a third control command CM3 from the first set of control commands C1. In an embodiment the third control command CM3 indicates to the third optical gate GT3 to either attenuate, or let pass, or block the third carrier wavelength optical signal W3.

It should be noted that other arrangements of the components of the first signal manager device SBM1 are possible.

In an embodiment, each optical detector, such as the first optical detector DE1, the second optical detector DE2, the third optical detector DE3, is connected to one of the outputs from an optical gate such as the first optical gate GT1, the second optical gate GT2, the third optical gate GT3. For example, the first optical detector DE1 is connected at one of the outputs from the first optical gate GT1, the second optical detector DE2 is connected at one of the outputs from the second optical gate GT2, and the third optical detector DE3 is connected at one of the outputs from the third optical gate GT3.

The first signal manager device SBM1 further comprises a carrier wavelength multiplexer MX adapted for multiplexing optical signals into a signal optical signal. The carrier wavelength multiplexer MX receives the processed first carrier wavelength optical signal W1 from the first optical gate GT1, the processed second carrier wavelength optical signal W2 from the second optical gate GT2, the processed third carrier wavelength optical signal W3 from the third optical gate GT3, and combines said carrier wavelength optical signals into the third intermediate optical signal S21.

In an example the first control command CM1 indicated the first optical gate GT1 to let pass the first carrier wavelength optical signal W1. The second control command CM2 indicated the second optical gate GT2 to attenuate the second carrier wavelength optical signal W2. The third control command CM3 indicated the third optical gate GT3 to block the third carrier wavelength optical signal W3. The carrier wavelength multiplexer MX outputs then the third intermediate optical signal S21 that comprises informative data on the first carrier wavelength W1, informative data on the second carrier wavelength W2 and no informative data on the third carrier wavelength W3. In another example, the third intermediate optical signal S21 comprises an empty third carrier wavelength W3, meaning that the optical component corresponding to the third carrier wavelength W3 is present but carries no informative data. In yet another example, the component corresponding to the third carrier wavelength W3 is not present within the third carrier wavelength W3.

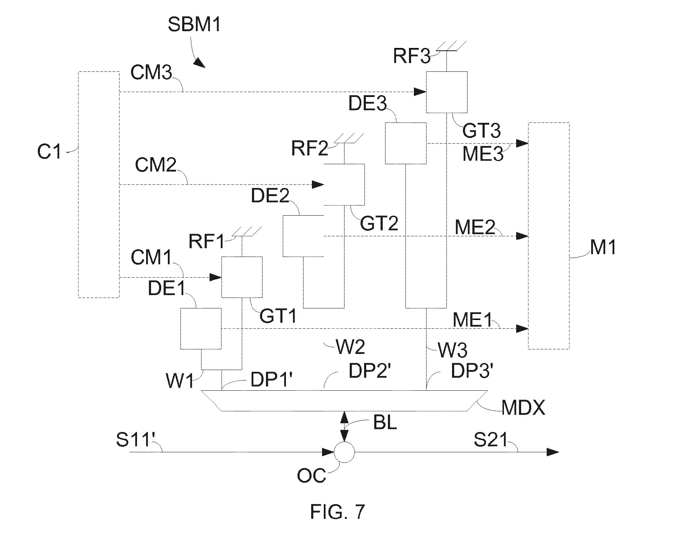

Referring to figure **FIG. 7****,** a schematic diagram of another signal manager device according to an embodiment of the invention is depicted.

In an embodiment, an other arrangement of a signal manager device such as the first signal manager device SBM1 or the second signal manager device SBM2 is detailed herein below.

The first signal manager device SBM1 comprises an optical circulator OC adapted for receiving the first intermediate input optical signal S11' and circulating it to an optical multiplexer-demultiplexer MDX. The optical circulator is also adapted to receive optical signals from said optical multiplexer-demultiplexer MDX and to provide said received optical signals to an output from the first signal manager device SBM1.

The optical multiplexer-demultiplexer MDX is connected to the optical circulator OC through a bidirectional optical link BL. The optical multiplexer-demultiplexer MDX is adapted for multiplexing optical signals and demultiplexing optical signals.

A first input/output optical port DP1' from the optical multiplexer-demultiplexer MDX is connected to the first optical detector DE1 and to the first optical gate GT1.

A second input/output optical port DP2' from the optical multiplexer-demultiplexer MDX is connected to the second optical detector DE2 and to the second optical gate GT2.

A third input/output optical port DP3' from the optical multiplexer-demultiplexer MDX is connected to the third optical detector DE3 and to the third optical gate GT3.

The first optical detector DE1 receives the first carrier wavelength optical signal W1 which has been demultiplexed from the first intermediate optical signal S11' by the optical multiplexer-demultiplexer MDX. The first optical detector DE1 performs the first measurement ME1 on the first carrier wavelength optical signal W1 for the determination of the first set of monitoring information M1.

The second optical detector DE2 receives the second carrier wavelength optical signal W2 which has been demultiplexed from the first intermediate optical signal S11' by the optical multiplexer-demultiplexer MDX. The second optical detector DE2 performs the second measurement ME2 on the second carrier wavelength optical signal W2 for the determination of the first set of monitoring information M1.

The third optical detector DE3 receives the third carrier wavelength optical signal W3 which has been demultiplexed from the first intermediate optical signal S11' by the optical multiplexer-demultiplexer MDX. The third optical detector DE3 performs the third measurement ME3 on the third carrier wavelength optical signal W3 for the determination of the first set of monitoring information M1.

A first optical reflector RF1 is connected to the first optical gate GT1. The first optical gate GT1 processes the first carrier wavelength optical signal W1 according to the first control command CM1. The processed first carrier wavelength optical signal W1, which is either attenuated, amplified, or blocked, or being let pass through, is provided by the first optical gate GT1 to the first optical reflector RF1. The processed first carrier wavelength optical signal W1 is optically reflected by the first optical reflector RF1 and propagates then back in the first optical gate GT1 and up to the optical multiplexer-demultiplexer MDX.

In an example, an optical reflector such as the first optical reflector RF1 is a fiber Bragg grating reflector.

A second optical reflector RF2 is connected to the second optical gate GT2. The second optical gate GT2 processes the second carrier wavelength optical signal W2 according to the second control command CM2. The processed second carrier wavelength optical signal W2 is provided by the second optical gate GT2 to the second optical reflector RF2. Said second optical reflector RF2 optically reflects the processed second carrier wavelength optical signal W2 which propagates then back to the second optical gate GT2, for being amplified or attenuated or blocked, and then back to the optical multiplexer-demultiplexer MDX.

A third optical reflector RF3 is connected to the third optical gate GT3. The third optical gate GT3 processes the third carrier wavelength optical signal W3 according to the third control command CM3. The processed third carrier wavelength optical signal W3 is provided by the third optical gate GT3 to the third optical reflector RF3. Said third optical reflector RF3 reflects the processed third carrier wavelength optical signal W3 which travels back through the third optical gate GT3, which let it pass through the optical multiplexer-demultiplexer MDX.

The optical multiplexer-demultiplexer MDX multiplexes the processed first carrier wavelength optical signal W1, the processed second carrier wavelength optical signal W2, and the processed third carrier wavelength optical signal W3 to generate the third intermediate optical signal S21.

The optical multiplexer-demultiplexer MDX provides the third intermediate optical signal S21 to the optical circulator OC through the bidirectional optical link BL. The optical circulator OC provides then to an input from the first signal manager device SBM1 the fourth intermediate optical signal S21.

It should be noted that other arrangements of the components of the first signal manager device SBM1 from the present embodiment are possible.

In an embodiment, each optical detector, such as the first optical detector DE1, the second optical detector DE2, the third optical detector DE3, is connected to one of the outputs from an optical gate such as the first optical gate GT1. In an example:
- one of the outputs from the first optical gate GT1 is connected to the first optical detector DE1 and another output from said first optical gate GT1 is connected to the first optical reflector RF1,
- one of the outputs from the second optical gate GT2 is connected to the second optical detector DE2 and another output from said second optical gate GT2 is connected to the second optical reflector RF2,
- one of the outputs from the third optical gate GT3 is connected to the third optical detector DE3 and another output from said third optical gate GT3 is connected to the third optical reflector RF3.

In such examples, it should be noted that the output from the optical gate on which is connected the optical reflector can also act as an input from said optical gate.

In an embodiment, the first signal manager device SBM1 is adapted to act as an optical slot blocker for processing an optical slot switching signal, which is a time-slotted wavelength-division multiplexed optical signal.

In an embodiment, the slot blocker is integrated on a monolithic silicon component which is advantageous for having a compact system and reducing power consumption.

In an embodiment the optical detectors such as the first optical detector DE1 are photodiodes integrated on the same silicon than the slot blocker. It is then possible to have the functionalities of the first signal manager device SBM1 integrated on a single optical component with a reduced footprint.

In an example, the slot blocker is implemented with Variable Optical Attenuator (VOA) for the optical gates for the control of the intensity of the light for each wavelength and each slot. This approach is particularly suitable for integrated silicon photonic where the VOAs can be integrated with the carrier wavelength demultiplexer and multiplexer. A possible structure for such slot blocker is a 16-channel wavelength, silicon-on-insulator, monolithic integrated slot blocker, wherein the silicon photonic circuit comprises 2 arrayed waveguide gratings, 16 VOAs, and 2 vertical fiber couplers.

In an embodiment, the first optical node ON1 is adapted for coherent optical transmissions. The first optical receiver RX1 is tuned on particular carrier wavelengths thanks to a local oscillator (not depicted on the figures). Such implementation is suitable for coherent modulation based on standard coherent receiver, for example implemented with discrete components. In an example, the coherent receivers may be implemented on the same platform as the slot blocker, for instance in silicon photonics.

In an embodiment, the first optical node ON1 is adapted for non coherent optical transmissions. In such case, no local oscillator is used and the first optical receiver RX1 is tuned to particular carrier wavelengths based on intensity modulation format. In this arrangement of the first optical node ON1, the carrier wavelengths to be dropped (corresponding to the dropped optical signal DS) or the carrier wavelengths to be added (corresponding to the added optical signal AS) are directly tapped from the first signal manager device SBM1/slot blocker. This architecture is advantageous as a low cost solution for the optical network NTW used in mobile backhauling.

In yet another embodiment, the first optical node ON1 is adapted for managing and processing multi-polarization optical signals, such as dual polarization optical signals. In such case, the first optical signal ON1 comprises two signal manager devices: the first signal manager device SBM1 is mapped to the processing of one of the polarization, and another signal manager device (not depicted on the figures) which is mapped to the other polarization. In such example, the arrangements of the first optical node ON1 as presented in figure FIG. 2 or figure FIG. 3 apply in similar manners.

The invention offers the first optical node ON1 in which the first input optical signal IS1 is processed by the first signal manager device SBM1 according to the first set of information IS1. In an example such first set of information IS1 was elaborated and transmitted by the downstream fifth optical node ON5. The process of deriving the control commands corresponding each to a carrier wavelength from the first set of information IS1 can be achieved in a short period of time. It is advantageous compared to an instantaneous monitoring within the first optical node ON1 which would require a delay line for each demultiplexed carrier wavelength optical signal. Such delay lines would render impossible the integration of the slot blocker/first signal manager device SBM1 on a single photonic component. Such delay lines would also increase the cost of the system.

The first set of control commands C1 allows each optical gate from the first signal manager device to process their associated carrier wavelength optical signal. Such processing could be for example attenuation of the power or light intensity of the carrier wavelength optical signal. In another example such processing could include also amplification or gain addition. The processing of the optical gates according to the first set of control commands C1 allows to keep control of the first input optical signal IS1 as it propagates along the optical network NTW. Advantageously the processing of the optical gates enables the first optical node ON1 to control the oscillation of the first input optical signal IS1 because of added carrier wavelength optical signal by the downstream fifth optical node ON5. In case informative data are added to the first input optical signal IS1 through the added optical signal, it can happen that oscillations are added within the first output optical signal. The oscillations of power of the optical signal degrade the overall performances of the optical network NTW, but the invention allows advantageously to control said oscillations through the processing of the next optical node according to embodiments.

Furthermore the cooperation of the signal manager device SBM1 with the control device CT1 and the delaying device allow a cost effective solution for ensuring the optical stability of the optical network NTW.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. An optical node (ON1) located on a lightpath from an optical network (NTW) for managing a first input optical signal (IS1) conveyed on said lightpath, said first optical node (ON1) comprising:
- a first control device (CT1) adapted:
o for receiving the first input optical signal (IS1),
o for extracting a first set of control information (I1) comprised in said first input optical signal (IS1),
o for generating a first set of control commands (C1) from said first set of control information (I1), said first set of control of commands (C1) being provided to a first signal manager device (SBM1),
- the first signal manager device (SBM1) adapted:
o for receiving and for processing the first input optical signal (IS1),
o for receiving from the first control device (CT1) the first set of control commands (C1),
o for applying said first set of control commands (C1) to the processing of the first input optical signal (IS1) for generating a first output optical signal (OS1),
o for outputting the first output optical signal (OS1).

2. An optical node (ON1) according to claim 1 wherein the first signal manager device (SBM1) is further adapted to determine a first set of monitoring information (M1) from the received or processed first optical signal (IS1), and to provide said first set of monitoring information (M1) to the first control device (CT1).

3. An optical node (ON1) according to claim 2 wherein the first control device (CT1) is further adapted to determine a second set of control information (I2) from the provided first set of monitoring information (M1) and to output said second set of control information (I2).

4. An optical node (ON1) according to claim 3 further comprising a first optical coupler (C01), a first input from said first optical coupler (C01) being connected to an output from the first signal manager device (SBM1) outputting the first output optical signal (OS1), a second input from said first optical coupler (C01) being connected to an output from the first control device (CT1) outputting the second set of control information (I2), the first optical coupler (C01) being adapted to combine the outputted second set of control information (I2) and the outputted first output optical signal (OS1) on an optical waveguide connected to an output of said first optical coupler (C01).

5. An optical node (ON1) according to any of the claims 1 to 4, wherein the control device (CT1) is adapted to generate the first set of control commands (C1) after the receiving of the first optical signal (IS1) in a time duration strictly less than a first threshold.

6. An optical node (ON1) according to claim 5 further comprising a first delaying device (DD11) comprising an output connected at the input of the signal manager device (SBM1) and an input for receiving the first input optical signal (IS1), the delaying device (DD1) being adapted for delaying said first input optical signal (IS1) for a time duration greater or equal than the first threshold.

7. An optical node (ON1) according to claim 6 further comprising a first optical splitter (SP1) adapted for duplicating the first optical signal (IS1), an input form said first optical splitter (SP1) receiving the first input optical signal (IS1) conveyed on an optical waveguide from the lightpath, a first output from said first optical splitter (SP1) being connected to the first control device (CT1), a second output from said first optical splitter (SP1) being connected to the input from the first delaying device (DD11).

8. An optical node (ON1) according to claim 5 further comprising an other delaying device (DD21) comprising an input connected to the output of the first signal manager device (SBM1) and adapted for delaying the first output optical signal (OS1) for a time duration greater or equal than the first threshold.

9. An optical node (ON1) according to claims 4 and 8 wherein the other delaying device (DD21) comprises an output for outputting the delayed first output optical signal (OS1), said output from the second delaying device (DD21) being connected to the first input from the first optical coupler (CO1).

10. An optical node (ON1) according to any of the claims 2 to 9 wherein the first optical signal (IS1) is a wavelength division multiplexed "WDM" optical signal comprising a plurality of carrier wavelengths (W1; W2; W3).

11. An optical node (ON1) according to claim 10 wherein the first set of monitoring information (M1) comprises a plurality of measurements (ME1; ME2; ME3), each measurement (ME1; ME2; ME3) being determined by the signal manager device (SBM1) from each carrier wavelength (W1; W2; W3) from the plurality of carrier wavelengths (W1; W2; W3).

12. An optical node (ON1) according to claim 11 wherein the first signal manager device (SBM1) comprises:
- an optical demultiplexer (DMX) adapted for demultiplexing the first input optical signal (IS1), the optical demultiplexer (DMX) comprising:
o an input for the first input optical signal (IS1) and,
o a plurality of demultiplexed outputs (DP1; DP2; DP3), each demultiplexed output (DP1; DP2; DP3) being associated to a carrier wavelength (W1; W2; W3) from the plurality of carrier wavelengths (W1; W2; W3),
- a plurality of optical gates (GT1; GT2; GT3),
o each optical gate (GT1; GT2; GT3) being connected to a demultiplexed output (DP1; DP2; DP3) from the plurality of demultiplexed outputs (DP1; DP2; DP3),
o and depending on the first set of control commands (C1), each of said optical gate (GT1; GT2; GT3) being adapted to block, or transparently let pass through, or let pass through with attenuation or amplification, the carrier wavelength (W1; W2; W3) from the plurality of carrier wavelengths (W1; W2; W3) associated to said demultiplexed output (DP1; DP2; DP3) from the plurality of demultiplexed outputs (DP1; DP2; DP3),
- a plurality of optical detectors (DE1; DE2; DE3),
o each optical detector (DE1; DE2; DE3) being connected to a demultiplexed output (DP1; DP2; DP3) from the plurality of demultiplexed outputs (DP1; DP2; DP3), or being connected to an output from an optical gate (GT1; GT2; GT3) from the plurality of optical gates (GT1; GT2; GT3),
o each of said optical detectors (DE1; DE2; DE3) being adapted to determine the measurement (ME1; ME2; ME3) from the plurality of measurements (ME1; ME2; ME3) corresponding to the carrier wavelength (W1; W2; W3) from the plurality of carrier wavelengths (W1; W2; W3) associated to said demultiplexed output (DP1; DP2; DP3) from the plurality of demultiplexed outputs (DP1; DP2; DP3).

13. An optical node (ON1) according to any of the claims 10 to 12 wherein the optical network (NTW) is an optical packet switching network and the first optical signal (IS1) is an optical packet switching signal.

14. An optical node (ON1) according to any of the claims 10 to 13 wherein the optical network (NTW) is an optical ring network.
